(19) Europäisches Patentamt
European Patent Office
Office européen des brevets

(11) **EP 2 532 244 B1**

(12) **EUROPÄISCHE PATENTSCHRIFT**

(45) Veröffentlichungstag und Bekanntmachung des Hinweises auf die Patenterteilung:
**11.09.2013 Patentblatt 2013/37**

(51) Int Cl.:
***A22C 11/02*** *(2006.01)*

(21) Anmeldenummer: **11169341.2**

(22) Anmeldetag: **09.06.2011**

(54) **Verfahren und Vorrichtung zum Einstellen der Kompression in einer Flügelzellenpumpe**

Method and device for adjusting the compression in a vane pump

Procédé et dispositif de réglage de la compression dans une pompe à cellules battantes

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.12.2012 Patentblatt 2012/50**

(73) Patentinhaber: **Albert Handtmann Maschinenfabrik GmbH & Co. KG
88400 Biberach (DE)**

(72) Erfinder: **Staudenrausch, Martin
88400 Biberach (DE)**

(74) Vertreter: **Grünecker, Kinkeldey, Stockmair & Schwanhäusser
Leopoldstrasse 4
80802 München (DE)**

(56) Entgegenhaltungen:
**EP-A1- 0 084 291      EP-B2- 0 432 388
DE-A1- 19 541 088      DE-C1- 3 909 137
US-A- 3 631 565**

**Beschreibung**

Die Erfindung betrifft ein Verfahren zum Einstellen der Kompression in den Flügelzellenkammern sowie eine Flügelzelle insbesondere zum Durchführen des Verfahrens gemäß den Oberbegriffen der Ansprüche 1 und 7.

Ähnliche Vorrichtungen werden in EP 0084291 offenbart.

Jede Verdrängerpumpe pulsiert beim Öffnen der Kammern in den Auslass (Druckseite der Pumpe), unabhängig von der geometrischen Pulsation. Dafür müssen folgende Bedingungen gegeben sein: - das zu fördernde Medium ist kompressibel; -es gibt einen Druckunterschied zwischen Auslass und der sich öffnenden Kammer der Pumpe. Beim Öffnen der Kammer in den Auslass findet ein Druckausgleich statt, der zu einer Pulsation führt. Der Druck kann in der letzten Kammer vor dem Auslass höher sein als im Auslass. Dann erfolgt beim Öffnen der Kammer ein Druckstoß in Richtung zum Auslass des Förderwerks. Andererseits kann auch der Gegendruck im Auslass höher sein als in der letzten Kammer, so dass ein Druckstoß in die sich öffnende Kammer erfolgt. Diese sich wiederholenden Druckstöße werden als Pulsation bezeichnet. Sie wirken sich letztlich auf die Genauigkeit der ausgestoßenen Portionen aus, da innerhalb der ausgestoßenen abgeteilten Portionen unterschiedlich viele Druckstöße erfolgt sind.

Je größer der Druckunterschied, die Kammergröße und die Kompressibilität des Mediums sind, desto größer ist die Pulsation im Volumenstrom. Wird eine solche Pumpe zum Herstellen von einzelnen Portionen verwendet, führt dies unweigerlich zu Gewichtsunterschieden der einzelnen Portionen.

Um in dem Fall mit einem erhöhten Gegendruck im Auslauf die Pulsation zu verhindern, kann der Kammerdruck bzw. die Kompression erhöht werden und so dem Auslaufdruck angepasst werden. Dadurch findet beim Öffnen der Kammer im Auslass praktisch kein Druckausgleich mehr statt.

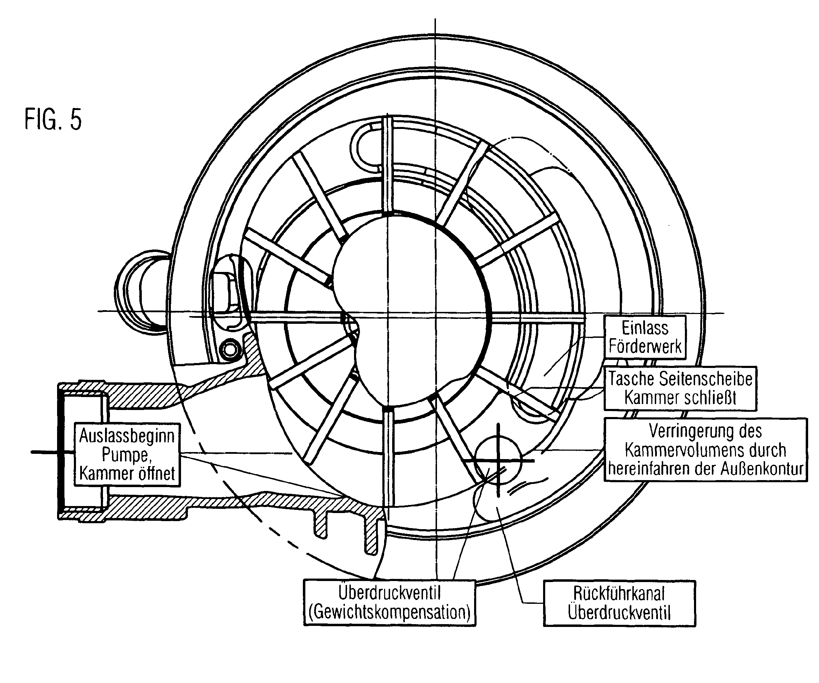

Bei den herkömmlichen Flügelzellenpumpen wird, wie insbesondere aus der Fig. 5 hervorgeht, in den Kammern, die die pastöse Masse fördern, ein erhöhter Druck erzeugt. Nach dem Einlass für die pastöse Masse in das Förderwerk folgt ein Kompressionsbereich. Durch Kompression der abzufüllenden Masse, also durch eine Verringerung des Volumens der geschlossenen Kammern, wird der Druck in der Kammer erhöht. Dabei wird der Radius der Außenkontur, an der die Pumpenflügel entlangstreifen und die Kammer abdichten, verringert.

Vereinfacht wird angenommen, dass die Kompressibilität des zu füllenden Mediums von dessen Gasanteil herrührt. Dieser Gasanteil ist in der Regel Luft, die beim Herstellen des Mediums, z.B. Wurstbrät (bewusst oder unbewusst) eingebracht wird. Für die Berechnung des Kammerdrucks kann damit für den Gasanteil des zu füllenden Mediums vereinfacht angenommen werden: p x v = konst.

Es wurde bereits versucht, die Kompression zu verändern. In der oberen Seitenscheibe, d.h. im Deckel der Flügelzellenpumpe, befindet sich auf der den Kammern zugewandten Seite eine Nut bzw. Tasche, so dass eine Verbindung zwischen den einzelnen Flügelzellenkammern im Einlassbereich gegeben ist. Man kann durch die Länge dieser Tasche beeinflussen, dass die Kammer später oder früher geschlossen wird bzw. die Kompression geringer oder größer ist. Da jedoch mit einem Förderwerk immer verschiedene Medien mit unterschiedlicher Kompressibilität gefördert werden, muss ein Überdruckventil (siehe Fig. 5) eingebaut werden, über das bei Überkompression die überschüssige Masse über den Rückführkanal in den Zuführbereich zurückgeführt wird. Dies führt zu einer unerwünschten Belastung bzw. Schädigung des abzufüllenden Mediums und kann beispielsweise bei Rohwurst zu "verschmierten Endprodukten" führen. Zudem wird über die Tasche in der Seitenscheibe (je nach Länge der Tasche und Kompressibilität des Mediums) Masse umgeformt, was zusätzlich schädlich sein kann, insbesondere bei empfindlichen Produkten.

Zur Änderung der Kompression kann auch ein Rotor mit mehr oder weniger Flügeln bzw. Zellen eingesetzt werden. Dadurch werden die Kammern generell kleiner oder größer. Bei gleicher Verkleinerung der geschlossenen Kammer steigt der Kammerdruck umso mehr an, je kleiner die Kammer vor der Kompression ist - und umgekehrt:

$$V2 = V1 - V \text{ Kompression,}$$

$$P2 = V1 \times P1/(V1 - V \text{ Kompression})$$

wobei P1, V1 Druck und Volumen vor der Kompression,

P2, V2 Druck und Volumen nach der Kompression, und

V Kompression das komprimierte Volumen sind.

Hier ergibt sich jedoch folgender Nachteil: Um keine geometrische Pulsation des Förderwerks zu haben, kann die Pumpeninnenkontur geometrisch nur genau zu einer Flügelanzahl ausgelegt werden. Das heißt, dass Gewichtsschwankungen auftreten, wenn ein Rotor mit mehr oder weniger Flügeln verwendet wird. Außerdem ist ein entsprechendes Umrüsten aufwendig. Hiervon ausgehend liegt der vorliegenden Erfindung die Aufgabe zugrunde, ein verbessertes Verfahren zum Einstellen der Kompression sowie eine verbesserte Flügelzellenpumpe bereitzustellen, die eine einfache Einstellung der Kompression in den Flügelzellenkammern ermöglichen.

Erfindungsgemäß wird diese Aufgabe durch die Merkmale der Ansprüche 1 und 7 gelöst.

Gemäß der vorliegenden Erfindung kann nun die Kompression durch Änderung der Führung der Flügel, d.h. durch Ändern einer Führungskontur einer Führungseinrichtung für die Flügel, eingestellt werden. Die Flügel sind radial beweglich und werden von einem Rotor angetrieben. Insbesondere sind die Flügel dabei radial verschiebbar im Rotor gelagert. Über eine Führungseinrichtung, insbesondere einen Spannexzenter, werden die Flügel in Radialrichtung zur Innenkontur des Pumpengehäuses hin bewegt. Das heißt, dass die Position der Flügel einerseits durch die Innenkontur des Pumpengehäuses und andererseits von der Führungseinrichtung, d.h. insbesondere dem Spannexzenter, bestimmt wird, der verdrehfest innerhalb (z.B. im Zentrum) des Rotors bzw. der Pumpe angeordnet ist und bei nicht durchgehenden Flügeln einen von der Innenkontur der Pumpe abgewandten inneren Bereich der Flügel entlang einer bestimmten Führungskontur führt.

Die Kompression kann nun durch die Änderung der Führung der Flügel, d.h. durch ihre radiale Stellung bzw. den Abstand der Flügelvorderkante zur Innenkontur des Pumpengehäuses eingestellt werden. Werden nun die Flügel so geführt, dass die Pumpenflügel nicht ganz außen an der Innenkontur des Pumpengehäuses geführt werden, sondern ein Abstand zwischen der Vorderkante der Flügel und der Innenwand entsteht, so wird keine so hohe Kompression, bzw. kein so hoher Druck in der Flügelzellenkammer beim vollständigen Schließen der Kammer erreicht. Der Flügel läuft, abhängig davon, wie weit er herausgefahren wird, auf die enger werdende Innenkontur des Pumpengehäuses zu und schließt die Kammer dann ab. Bis zum vollständigen Schließen der Flügelzellenkammer kann durch den Spalt zwischen Flügel und Innenwand noch Füllgut in die nachfolgende Kammer zurückströmen.

Das erfindungsgemäße Verfahren und die erfindungsgemäße Vorrichtung ermöglichen eine exakte Einstellung der Kompression. Somit ist eine Anpassung der Kompression an unterschiedliche Medien möglich. Die Medien können ganz besonders schonend gefördert werden, da keine oder wenig Masse über ein Überdruckventil abgeleitet werden muss. Es muss kein Füllmedium über eine Tasche in der Seitenscheibe zurückgeführt werden. Gemäß der Erfindung kann durch exakte Einstellung der Kompression der Druck in den Flügelzellenkammern so eingestellt werden, dass es zu keiner Pulsation und somit zu einer verbesserten Gewichtsgenauigkeit kommt.

Vorteilhafterweise wird die Führung der Flügel in einem Einstellbereich eingestellt, der in Drehrichtung der Pumpe betrachtet vor dem Kompressionsbereich liegt. Der Kompressionsbereich ist als der Bereich definiert, in dem zwischen Einlass und Auslass die Flügelzellenkammern verkleinert werden, also der Abstand zwischen Rotor und Innenwand des Pumpengehäuses abnimmt und die Flügel die Flügelzellenkammern verschließen. Der Einstellbereich erstreckt sich zumindest vom Ende eines Einlassbereichs bis zu einem Anfangspunkt des Kompressionsbereichs, an dem ein Flügel eine Flügelzellenkammer schließt, so dass ein Druckausgleich zwischen Einlassbereich und einem Bereich, in dem sich die Flügelzellen verkleinern, erfolgen kann. Als Einlassbereich der Pumpe versteht man den Abschnitt, der in einem Bereich des Einlasses angeordnet ist, über den die pastöse Masse zugeführt wird. Die Führung der Flügel wird dabei in Abhängigkeit der gewünschten Kompression eingestellt, wodurch sich eine Änderung der Flügelstellung in Radialrichtung ergibt.

Die Flügel können dabei zur Reduktion der Kompression so geführt werden, dass sie im Einstellbereich nicht an der Innenkontur des Pumpengehäuses anliegend entlang geführt werden, derart, dass ein Spalt ( vorzugsweise mit einer Breite von 0,5 - 10 mm) zwischen den Flügelenden und der Innenwand des Pumpengehäuses entsteht. Soll also der Druck in der Flügelzellenkammer reduziert werden, werden im Einstellbereich die Flügel so geführt, dass sie weniger weit in Richtung Pumpengehäuse ragen. Das heißt, dass die Kompression in den Flügelzellenkammern durch Ändern der Spaltbreite und/oder -länge (d.h. wie weit der Spalt in Drehrichtung ragt bzw. wo der Punkt liegt an dem die Flügel die Kammer verschließen) eingestellt werden kann.

Der Spalt zwischen den Flügelenden und der Innenwand des Pumpengehäuses muss sich nicht über die gesamte Höhe des Flügels erstrecken.

Die Änderung der Führung der Flügel kann auf einfache Art und Weise durch Austauschen einer Führungseinrichtung, insbesondere eines Spannexzenters mit einer Führungseinrichtung mit unterschiedlicher Führungskontur erfolgen. Das Auswechseln des Spannexzenters kann auf einfache Art und Weise erfolgen, indem der Spannexzenter beispielsweise einfach auf eine ortsfeste Halterung aufgesteckt oder eingeschraubt wird. Ein Austausch der Führungseinrichtung kann einfach vom Kunden selbst durchgeführt werden.

Zusätzlich oder alternativ kann die Änderung der Führung auch durch Einstellen der Führungskontur einer Führungseinrichtung, insbesondere des Spannexzenters, erfolgen. Durch die geänderte Führungskontur erfolgt somit eine geänderte Führungsbahn der Flügel.

Alternativ oder zusätzlich kann die Führung der Flügel auch so geändert werden, dass im Einstellbereich ein Führungselement, z.B. ein Einsatzelement, an der Innenwand des Pumpengehäuses angeordnet wird. Das Führungselement erstreckt sich vorteilhafterweise über einen Teil der Höhe der Innenwand des Pumpengehäuses bzw. des Flügels, derart, dass sich noch ein Spalt zwischen der Flügelvorderkante und der Innenwand des Pumpengehäuses ausbilden kann. Es ist auch möglich, dass sich das Führungselement über die gesamte Höhe der Innenwand des Pumpengehäuses erstreckt, so dass der Flügel von der Innenwand nach innen gedrückt wird und der Spalt zwischen der Vorderkante des Flügels und der Innenwand des Pumpengehäuses in Drehrichtung nach dem Führungselement entsteht.

Die Lösung mit einem Führungselement ist besonders vorteilhaft für Flügelzellenpumpen mit durchgehenden Flügeln, die ebenfalls verschiebbar im Rotor gelagert sind und deren radiale Bewegung, d.h. Verschiebung nach innen oder außen ausschließlich über die Innenkontur des Pumpengehäuses bestimmt wird. Das Führungselement kann eingelegt werden; es kann aber auch ein Segment der Innenwand nach innen, d.h. zur Mitte hin, verstellt werden.

Durch die Fliehkraft können die Flügel bei sehr wenig Reibung und insbesondere bei wässrigen Medien von alleine nach außen laufen, auch wenn sie von dem Spannexzenter so geführt werden, dass ein Abstand zur Innenwand beabsichtigt ist. Dadurch kann es vorteilhaft sein, wenn die Bewegung der Flügel nach außen in Richtung Pumpengehäuse durch eine entsprechende Einrichtung beschränkt wird. Eine solche Einrichtung kann beispielsweise ein Führungselement sein, das, wie zuvor beschrieben, an der Innenkontur des Pumpengehäuses angeordnet ist. Eine solche Einrichtung kann alternativ oder zusätzlich auch durch einen Anschlag der Flügel am Rotor und/oder einer Führung des Flügels in dem Spannexzenter, die eine Bewegung des Flügels in Richtung Pumpengehäuse begrenzt, realisiert werden.

Eine Flügelzellenpumpe zum Durchführen des Verfahrens weist ein Pumpengehäuse auf, Flügel, einen Rotor sowie eine Führungseinrichtung zum Führen der Flügel in Radialrichtung. Die Führungseinrichtung ist dabei derart ausgebildet, dass in einem Einstellbereich ein Spalt zwischen den Flügelenden und der Innenwand des Pumpengehäuses entsteht. Über die Einstellung der Spaltbreite bzw. -länge kann die Kompression bzw. der Druck in den Flügelzellenkammern eingestellt werden.

Vorteilhafterweise weist der Spalt eine Breite auf, die in einem Bereich von 0,5 bis 10 mm liegt, z.B. bei einer Schluckmenge von 0,2 - 10l. Die Spaltbreite und/oder -länge kann durch eine Änderung der Führung der Flügel geändert werden, wodurch sich die Kompression bzw. der Druck in den Flügelzellenkammern verändert. Das Ende des Spalts, d.h. der Beginn des Kompressionsbereichs bzw. der Punkt, an dem die Flügel die Flügelzellenkammern schließen, ist somit in einem Bereich zwischen dem Ende des Einlassbereichs und vor dem Auslass einstellbar und liegt vorzugsweise näher am Einlass als am Auslass. Der Anfang des Spalts ist ebenfalls einstellbar und kann, entgegen der Drehrichtung betrachtet bis in den Einlassbereich oder sogar bis in den Saugbereich reichen.

Die Flügelzellenpumpe kann mehrere austauschbare Führungseinrichtungen, insbesondere mehrere Spannexzenter mit unterschiedlichen Führungskonturen aufweisen. Somit kann durch den Austausch der Führungseinrichtung die Führung und somit letztendlich die Spaltbreite und/oder -länge, eingestellt werden.

Der Spannexzenter kann auch eine Einrichtung zum Verstellen der Führungskontur aufweisen und insbesondere zwei- oder mehrteilig ausgebildet sein. Somit kann die Führung auf verschiedene abzufüllende Medien durch eine einstellbare Positionsveränderung der Spannexzentersegmente zueinander erreicht werden. Es ist auch möglich, Teile des Spannexzenters zu entfernen, um die Führungskontur zu ändern. Durch eine entsprechende Einrichtung zum Verstellen der Führungskontur kann eine sehr exakte und insbesondere auch stufenlose Anpassung der Kompression erfolgen.

Die Führungseinrichtung kann auch ein Führungselement im Einstellbereich aufweisen, das an der Innenwand des Pumpengehäuses angeordnet ist und sich insbesondere über einen Teil der Höhe der Innenwand des Pumpengehäuses bzw. der Flügel erstreckt. Die Erfindung wird nachfolgend unter Bezugnahme der folgenden Figuren näher erläutert werden. Die Einstellung der Führungskonturen kann auch derart bewerkstelligt werden, dass die Führungseinrichtung, insbesondere der Spannexzenter, derart gelagert ist, dass seine Position in Radialrichtung verstellbar ist, wobei z.B. der Spannexzenter in einem sich nach außen in Richtung Pumpengehäuse erstreckenden Langloch verstellbar gelagert sein kann. Soll die Kompression beispielsweise verringert werden, so kann die Führungseinrichtung nach innen versetzt und fixiert werden, derart, dass die Führungskontur einen vergrößerten Abstand zur Innenwand des Pumpengehäuses aufweist.

Fig. 1    zeigt schematisch eine Flügelzellenpumpe gemäß der vorliegenden Erfindung in perspektivischer Darstellung.

Fig. 2    zeigt schematisch eine Draufsicht auf eine Flügelzellenpumpe (ohne Seitenscheibe) gemäß der vorliegenden Erfindung mit einem Spannexzenter für eine hohe Kompression.

Fig. 3    zeigt schematisch eine Draufsicht auf eine Flügelzellenpumpe (ohne Seitenscheibe) gemäß der vorliegenden Erfindung mit einem Spannexzenter für eine niedrige Kompression.

Fig. 4a    zeigt einen Schnitt entlang der Linie I-I in Fig. 2, ohne Spalt zwischen Flügelende und Innenwand des Pumpengehäuses.

Fig. 4b    zeigt einen Schnitt entlang der Linie I-I, mit einem Spalt zwischen Flügelende und Innenwand des Pumpengehäuses.

Fig. 4c    zeigt einen Schnitt durch die Flügelzellenpumpe mit einem eingesetzten Führungs-element.

Fig. 4d    zeigt einen Schnitt durch die Flügelzellenpumpe, der einen Flügel mit Anschlag zeigt.

Fig. 4e    zeigt einen Schnitt durch die Flügelzellenpumpe der eine Führung des Flügels in dem Spannexzenter zeigt, wobei eine Bewegung des Flügels in Richtung Pumpengehäuse begrenzt wird.

Fig. 5     zeigt schematisch eine Draufsicht auf eine Flügelzellenpumpe gemäß dem Stand der Technik.

Fig. 6     zeigt schematisch einen Querschnitt durch eine Flügelzellenpumpe mit durchgehenden Flügeln.

Fig. 7     zeigt schematisch eine Füllmaschine.

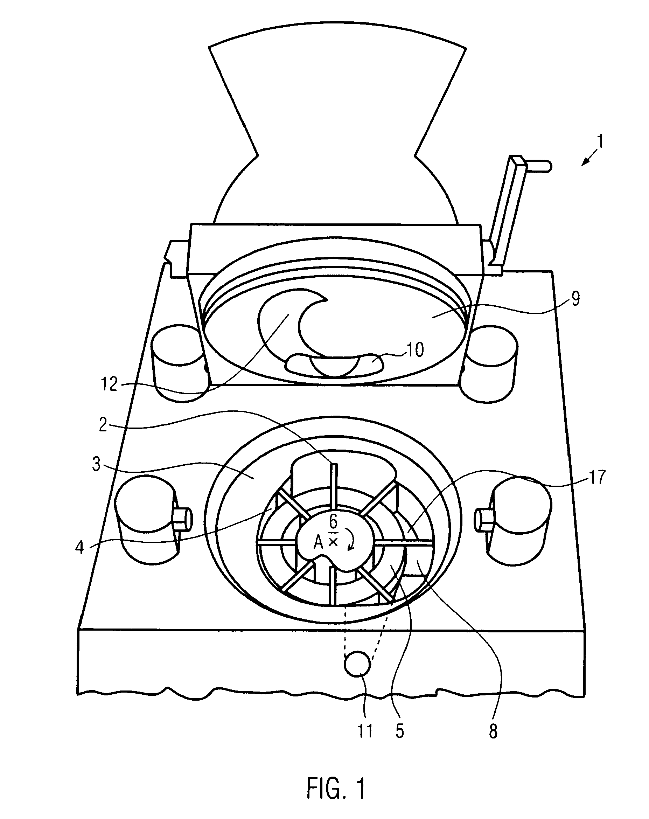

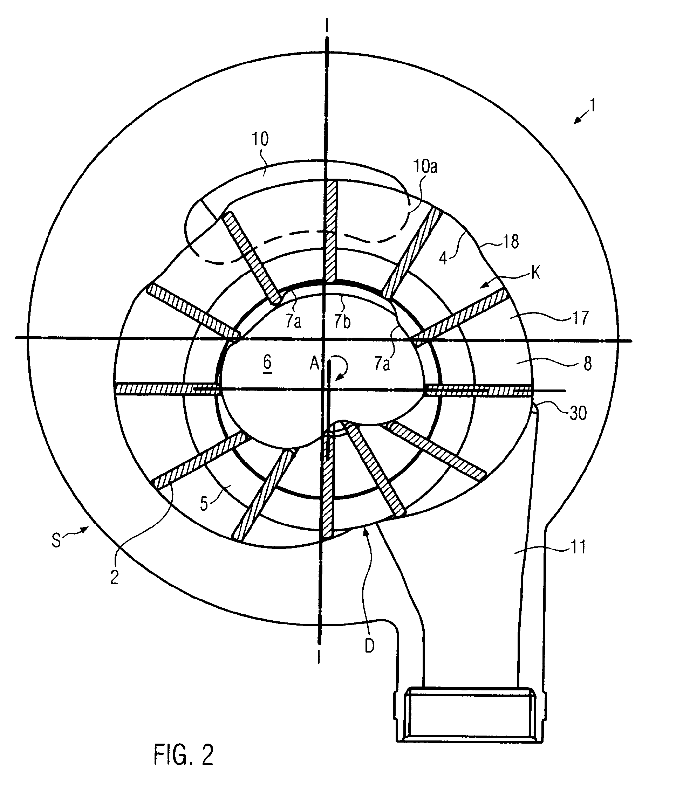

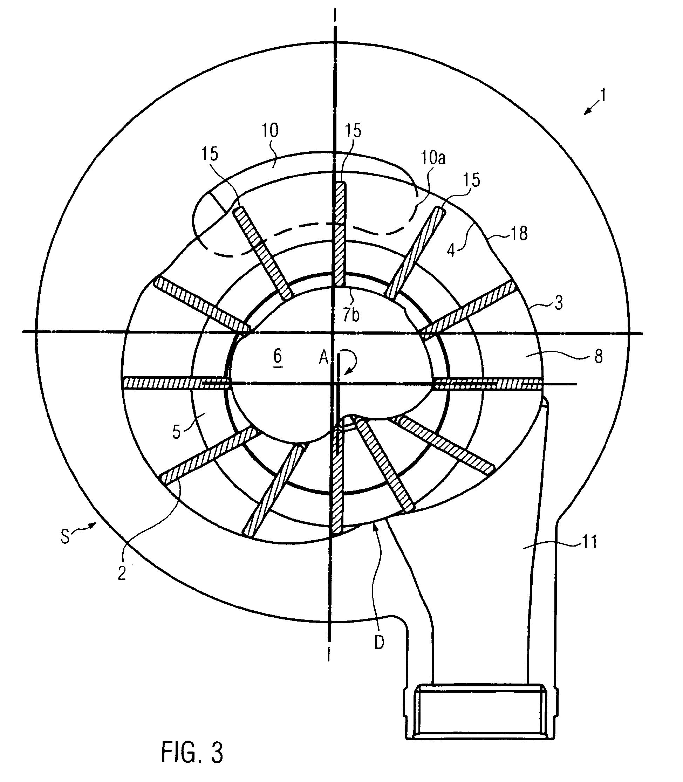

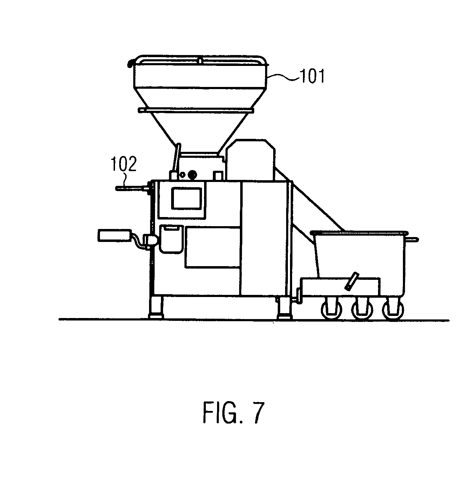

Fig. 1 zeigt eine Flügelzellenpumpe gemäß der vorliegenden Erfindung in perspektivischer Darstellung. Fig. 2 und 3 zeigen eine Draufsicht auf eine Flügelzellenpumpe gemäß der vorliegenden Erfindung. Die Flügelzellenpumpe ist insbesondere Teil einer Füllmaschine z.B. aus der Serie VF600 der Firma Handtmann. Wie aus den Fig. 1 bis 3 hervorgeht, weist die Flügelzellenpumpe 1 zum Fördern von pastösen Massen, insbesondere von Wurstbrät, ein Pumpengehäuse 3 auf, sowie einen Einlass 10 für die pastöse Masse und einen Auslass 11 für die portionierte Masse. Der Einlass 10 ist beispielsweise mit dem Auslass eines Trichters 101 (siehe Fig. 7) verbunden, über den die pastöse Masse der Flügelzellenpumpe 1 zugeführt wird. Der Auslass 11 ist beispielsweise mit einem Füllrohr 102 (siehe Fig. 7) verbunden. Über das Füllrohr 102 wird dann die portionierte pastöse Masse in bekannter Weise in die auf dem Füllrohr geraffte Wursthülle oder eine coextrudierte Wursthülle geschoben. Die Flügelzellenpumpe 1 weist in dem Pumpengehäuse 3 einen vorzugsweise exzentrisch angeordneten, in Drehung versetzbaren Rotor 5 auf, der über eine Pumpenwelle um die Achse A angetrieben wird. Die Mittelachse A ist exzentrisch im Gehäuse 3 angeordnet.

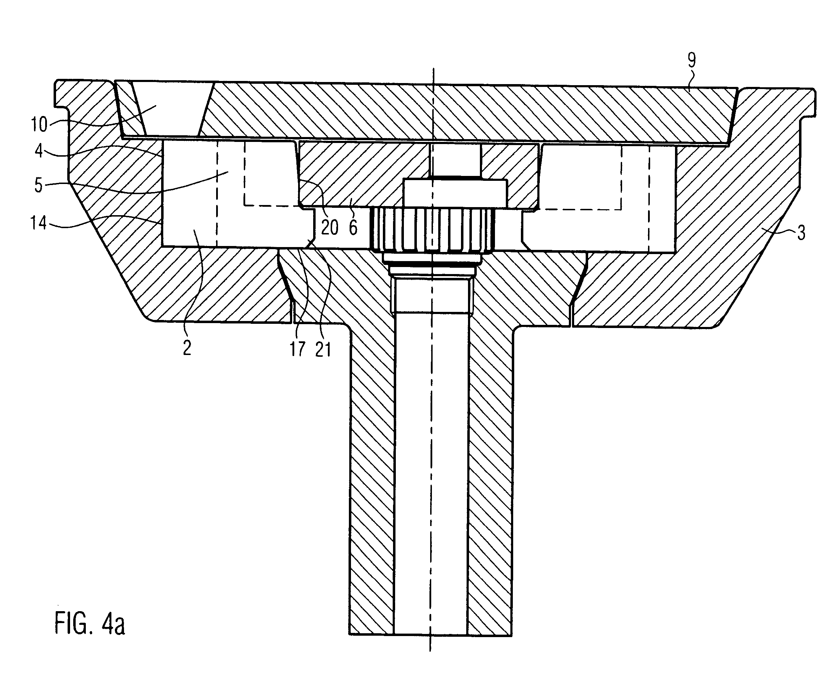

Der Rotor 5 weist radial verschiebbar gelagerte Flügel 2 auf, die mit der Innenkontur des Pumpengehäuses bzw. der Innenwand 4, dem Boden 17 des Pumpengehäuses 3 sowie der Seitenscheibe bzw. dem Deckel 9 des Pumpengehäuses Flügelzellenkammern 8 bzw. Förderzellen bilden. Der Rotor 5 ist um eine Führungseinrichtung, hier den Spannexzenter 6, angeordnet. Der Spannexzenter ist vorzugsweise exzentrisch im Pumpengehäuse 3 angeordnet. Der Spannexzenter hat die Funktion, die im Rotor 5 radial verschiebbar gelagerten Flügel entsprechend seiner Führungsaußenkontur 7a,b in Radialrichtung zu führen. Das heißt, dass die Position der Flügel 2 einerseits durch die Innenkontur des Pumpengehäuses und andererseits durch die Führungskontur des Spannexzenters 6 bestimmt wird. Der Spannexzenter ist drehfest angeordnet. Wie insbesondere aus der Fig. 4a hervorgeht, kann gemäß einem bevorzugten Ausführungsbeispiel der Rotor sich radial erstreckende Aussparungen haben, in denen die Flügel 2 gelagert sind. Die Flügel 2 haben einen hinteren Abschnitt 20, der an der Führungseinrichtung 6, hier dem Spannexzenter, anliegt und somit geführt wird. Ein L-förmiger Abschnitt 21, der über das hintere Ende 20 nach innen vorsteht, liegt in einem Bereich zwischen der Führung 6 und dem Boden 17. In Fig. 4a ist die Führungseinrichtung 6 derart ausgebildet, dass die Vorderkante des Flügels 14 an der Gehäuseinnenwand 4 anliegt. Durch Drehung des Rotors 5 bzw. der Flügel 2 kann in bekannter Weise pastöse Masse in den Förderzellen 8 vom Einlass 10 zum Auslass 11 gefördert werden.

Die Flügelzellenpumpe lässt sich allgemein in mehrere Bereiche einteilen, wie insbesondere aus den Fig. 2 und 3 hervorgeht. Einer dieser Bereiche ist der Saugbereich S, ein weiterer der Druckbereich bzw. Kompressionsbereich K, wobei ein Dichtbereich D den Kompressionsbereich K vom Saugbereich S trennt. Der Kompressionsbereich K beginnt in Drehrichtung nach dem Einlass 10 in einem Bereich 18, in dem sich die Flügelzellenkammern verkleinern, d.h. in dem der Radius der Innenkontur des Pumpengehäuses verringert wird und die Flügelzellenkammern durch die Flügel verschlossen sind. Nach dem Ende 30 des Kompressionsbereichs beginnt der Auslassbereich 11. Daran schließt sich der Dichtbereich D an, welcher den Druckbereich vom Saugbereich 5 trennt. Der Saugbereich beginnt an einer Stelle, an der der spaltartige Abstand zwischen Rotor 5 und der Innenwand 4 des Pumpengehäuses zunimmt, derart, dass sich die Flügelzellenkammern 8 wieder vergrößern. Der Saugbereich verläuft bis zum Beginn des Einlass 10. Im Saugbereich herrschen Drücke von 0,005 bis 1 bar. Wie in der Fig. 1 gezeigt ist, kann der Deckel bzw. die Seitenscheibe 9 auf der dem Förderwerksinnenraum zugewandten Seite eine vertiefte Nutfläche bzw. Aussparung 12 im oberen Bereich des Saugbereichs aufweisen. Die Nutfläche überdeckt bei geschlossenem Deckel die Flügelzellenkammern 8 im Saugbereich und bildet dabei einen Spalt zwischen Deckelunterseite und der Flügeloberseite, dessen Größe im Wesentlichen der Nuttiefe entspricht. Während im Kompressionsbereich die Flügelzellenkammern 8 im Wesentlichen abgedichtet sind, wird durch den Spalt 12 zwischen den einzelnen Flügelzellen eine Verbindung zur Erzeugung eines Unterdrucks gebildet.

In der Fig. 2 und 4a liegen die Flügel 2 im Bereich des Einlasses 10 und im Kompressionsbereich an der Innenkontur bzw. der Innenwand 4 des Pumpengehäuses 3 an. Im Kompressionsbereich sind die Flügel 2 durch die Innenwand 4 und die entsprechende Führungskontur 7a nach innen verschoben. Vom Spannexzenter 6 werden die Flügel dann im Saugbereich S wieder nach außen geschoben.

Um den Druck in den Flügelzellenkammern 8 einzustellen, beispielsweise, dass er dem Druck im Auslassbereich 11 entspricht, wird nun die Führung der Flügel 2 entsprechend angepasst.

Zur Reduzierung des Drucks in den Flügelzellenkammern 8, d.h. zur Reduzierung der Kompression, wird die Führungskontur 7a, wie sie in Fig. 2 gezeigt ist, entsprechend der Führungskontur 7b, wie sie in Fig. 3 gezeigt ist, geändert.

Die Führungskontur ändert sich insbesondere so, dass die Flügel 2 vor dem Beginn 18 des Kompressionsbereichs (hier findet die Verringerung des Kammervolumens statt) nicht ganz außen an der Innenkontur des Pumpengehäuses, anliegen, sondern mit einem geringen Spalt von ca. 0,5 bis 10 mm zur Innenkontur entlanggeführt werden. So wird keine so hohe Kompression erreicht, da das Ausgangskammervolumen beim vollständigen Schließen der Flügelzellenkammer 8 geringer ist.

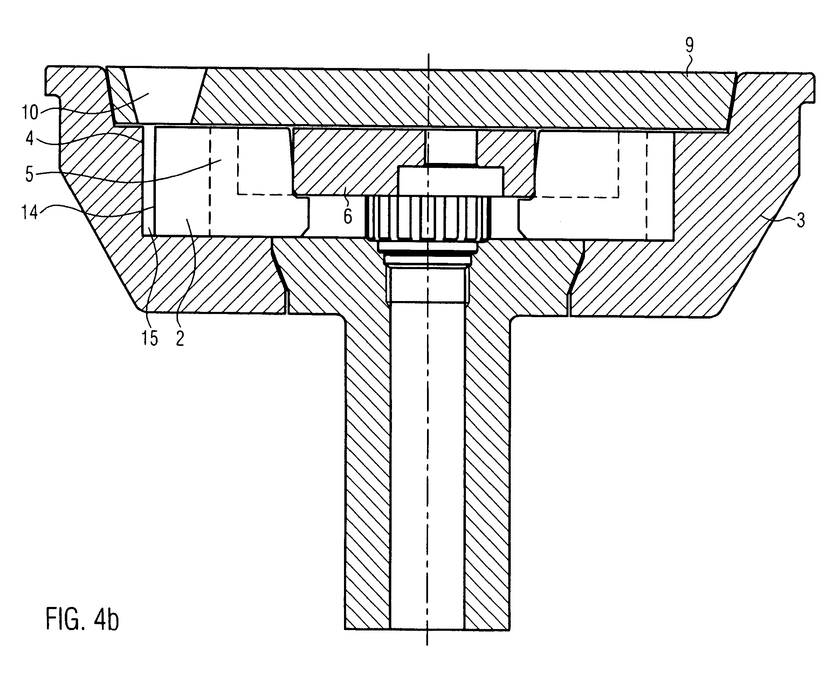

Fig. 4a zeigt einen Längsschnitt entlang der Linie l-l der Fig. 2, wobei das äußere Flügelzellenende 14 bzw. die Vorderkante 14 an der Innenwand 4 anliegt derart, dass kein Spalt in einem Bereich vor der Kompressionszone erzeugt wird. Fig. 4b zeigt ebenfalls einen Längsschnitt in einem Bereich vor der Kompressionszone, wobei jedoch, bedingt durch die Führungseinrichtung 6, der Flügel 2 nicht so weit nach außen verfahren wird, wie in Fig. 4a, so dass ein Spalt 15 zwischen dem Flügel endet, d.h. der Vorderkante des Flügels 14 und der Innenwand 4 des Pumpengehäuses 3 entsteht.

Wie bereits erwähnt, erfolgt die Änderung der Führung in einem Einstellbereich vor dem Beginn 18 des Kompressionsbereichs K. Der Punkt 18 entspricht dem Punkt, an dem ein Flügel in Kontakt mit der Innenwand 4 des Pumpengehäuses kommt und die entsprechende Flügelzellenkammer schließt. Der Punkt 18 liegt in einem Bereich, in dem sich der Abstand zwischen Rotor 5 und Innenwand 4 verkleinert. Vorzugsweise liegt dieser Einstellbereich in einem Bereich des Einlasses 10 bis zu dem Beginn 18 des Kompressionsbereichs K. Auf jeden Fall sollte sich der Spalt mindestens zwischen dem Einlassende 10a bis zu einem Punkt 18, an dem die Flügel 2 die Kammern 8 schließen, erstrecken, derart, dass ein Druckausgleich zwischen Flügelzellenkammer und Einlassbereich bzw. Saugbereich erfolgen kann.

Zur Verringerung der Kompression ist bei dem in Fig. 3 gezeigten Spannexzenter 6 die Führungskontur 7b im Vergleich zur Führungskontur 7a nach innen versetzt.

Der Flügel 2 läuft, abhängig davon, wie weit er herausgefahren wird, auf die enger werdende Innenkontur des Pumpengehäuses und schließt die Kammer dabei ab. Bis zum vollständigen Schließen der Flügelzellenkammern 8 kann durch den Spalt 15 zwischen dem Pumpenflügel und der Innenwand 4 noch pastöse Masse in die nachfolgende Kammer zurückströmen, so dass es zu einer Reduktion der Kompression kommt.

Soll nun die Kompression an ein bestimmtes Füllmedium angepasst werden derart, dass der Flügelzellenkammerdruck dem Druck im Auslassbereich entspricht, so kann die Führungskontur 7a,b derart geändert werden, dass ein erster Spannexzenter mit der Führungskontur 7a (Fig. 2) ersetzt wird durch einen Spannexzenter mit einer anderen Führungskontur 7b (Fig. 3). Dabei kann der Spannexzenter 6 einfach z.B. durch Aufstecken, Einschrauben ortsfest an einer bestimmten Halterung befestigt werden. Vorzugsweise weist dann eine Flügelzellenpumpe mehrere Spannexzenter 6 mit unterschiedlichen Führungskonturen (für unterschiedliche Spaltbreiten s und Längen L) auf, die entsprechend einem bestimmten Füllmedium zur Einstellung eines gewünschten Kompressionsdrucks ausgetauscht werden können.

Es ist auch möglich, dass der Spannexzenter 6 zwei- oder mehrteilig gestaltet ist, so dass die Anpassung auf verschiedene abzufüllende Medien durch eine einstellbare Positionsveränderung der Spannexzentersegmente zueinander erreicht werden kann. Der Abstand von zwei Spannexzenterelementen kann beispielsweise durch eine entsprechende Justiereinrichtung eingestellt und fixiert werden. Auch ist es möglich, dass ein oder mehrere Segmente des Spannexzenters abmontiert werden können, um die Führungskontur entsprechend zu ändern. Alternativ oder zusätzlich ist es auch möglich, die Führungseinrichtung, d.h. hier insbesondere den Spannexzenter 6, derart zu lagern, dass seine Position in Radialrichtung, d.h. in eine Richtung zum Pumpengehäuse hin, verstellbar ist, um so eine entsprechende Führungskontur 7a,b einzustellen. Dazu kann der Spannexzenter 6 beispielsweise in einen sich nach außen in Richtung Pumpengehäuse erstreckenden Langloch verstellbar gelagert sein. Durch Verschieben und Fixieren des Spannexzenters im Langloch kann dann eine bestimmte Position und somit eine bestimmte Lage der Führungskontur 7a,b und damit eine bestimmte Spaltbreite eingestellt werden.

Somit kann durch Änderung der Führung der Flügel in Radialrichtung der Druck in den Flügelzellenkammern eingestellt werden.

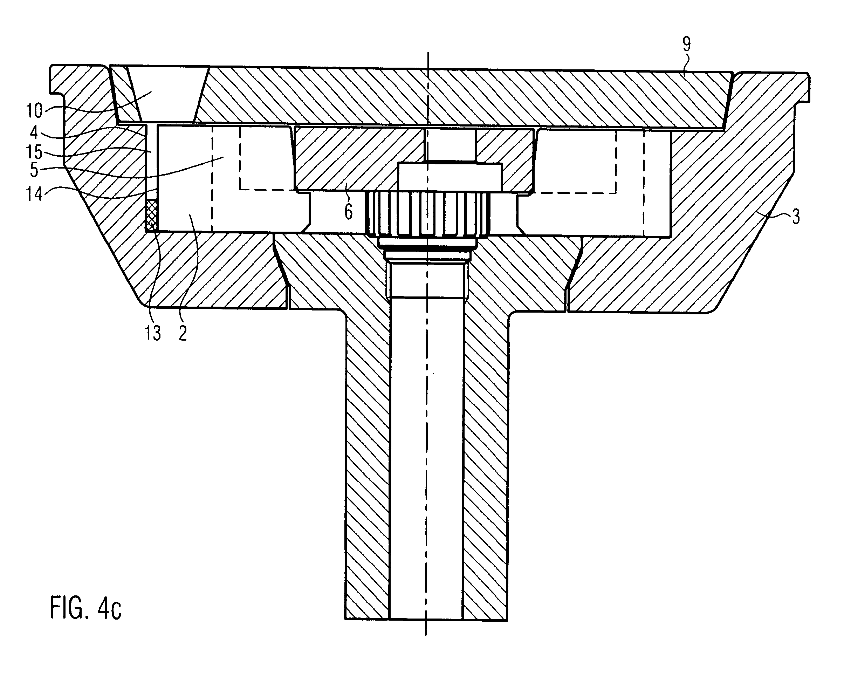

Die Erzeugung des Spaltes 15 kann jedoch nicht nur durch die Veränderung der Führungskontur 7a, b des Spannexzenters 6 erfolgen sondern zusätzlich oder alternativ auch durch ein Führungselement an der Innenwand 4 des Pumpengehäuses 3 im Einstellbereich. Wie in Fig. 4c gezeigt ist, ist im Bereich des Bodens 17 ein entsprechendes Führungsteil 13 befestigt, derart, dass ein Abstand zwischen dem Flügelende 14 bzw. der Vorderkante des Flügels 14 und der Innenwand 4 entsteht. Das Führungselement 13 kann eingesetzt und befestigt werden (durch Verschrauben, formschlüssig Einstecken ) oder aber es ist auch möglich, dass das Führungselement 13 als Segment des Pumpengehäuses 3 ausgebildet ist und nach innen verschoben und fixiert werden kann (beispielsweise durch eine Einstellschraube) derart, dass sich der Spalt 15 ergibt. Die Spaltbreite 15 ist dann vorzugsweise stufenlos verstellbar. Das Führungselement 13 muss sich nicht über die gesamte Höhe des Flügels 2 bzw. der Innenwand 4 der Flügelzellenkammer 8 erstrecken.

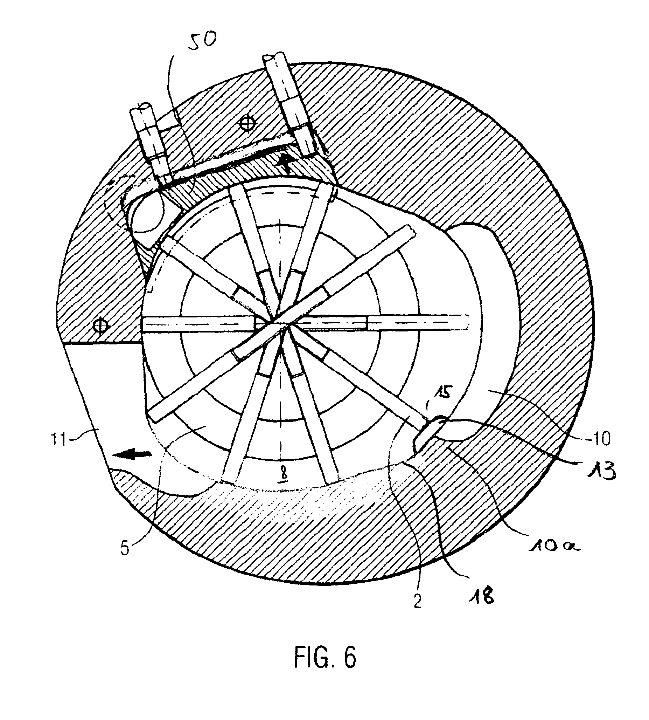

Eine Änderung der Führung über das Führungselement 13 ist insbesondere für Flügelzellenpumpen mit durchgehenden Flügeln, wie sie beispielsweise in Fig. 6 gezeigt ist, geeignet. Wie aus Fig. 6 deutlich wird, sind hier die Flügel 2 ebenfalls radial verschiebbar im Rotor 5 gelagert, wobei die Führung der Pumpenflügel ausschließlich durch die Pumpengehäuseinnenkontur erfolgt Eine solche Pumpe ist z.B. in der EP 0 432 388 B2 näher beschrieben. Die durch das Führungselement bedingte Verschiebung der Flügel zur Erzeugung eines Spalts 15, kann auf der gegenüberliegenden Seite durch ein in der Innenwand 4 vorgesehenes radial nach außen - hier durch die Einstellschrauben - verstellbares Einsatzelement 50 und /oder Flügel unterschiedlicher Länge ausgeglichen werden. Auch hier gilt, dass das Führungselement 13 zumindest in einem Bereich zwischen Einlassende 10a und Anfang 18 des Kompressionsbereichs liegt, derart, dass der Spalt 15 zumindest in einem Bereich vom Einlassende 10a bis zum Anfang 18 des Kompressionsbereichs liegt. ( Das Führungselement13 muss sich nicht über den gesamten Bereich von Punkt 10a bis 18 erstrecken). Bei einer weiteren Ausführungform mit durchgehenden Flügeln ist kein Führungselement 13 in dem zuvor genannten Bereich vorgesehen. Die Führung erfolgt über die Kontur der Innenwand 4 derart, dass sich in dem Bereich von Punkt 10a bis 18 der Spalt 15 ergeben kann. Dazu kann eine Flügellänge verwendet werden, die die Ausbildung des Spalts zulässt. Es ist dabei möglich das Einsatzelement radial nach außen zu verstellen, derart, dass in dem zuvor genannten Einstellbereich der Spalt 15 entsteht.

Es ist möglich, dass durch die Fliehkraft die Flügel bei sehr wenig Reibung im Einstellbereich, wie in Fig. 3 gezeigt ist, von alleine nach außen laufen, insbesondere bei sehr wässrigen Medien.

Dann ist es vorteilhaft, wenn die Vorrichtung eine Einrichtung zum Beschränken der Flügelbewegung nach außen in Richtung Pumpengehäuse 3 aufweist.

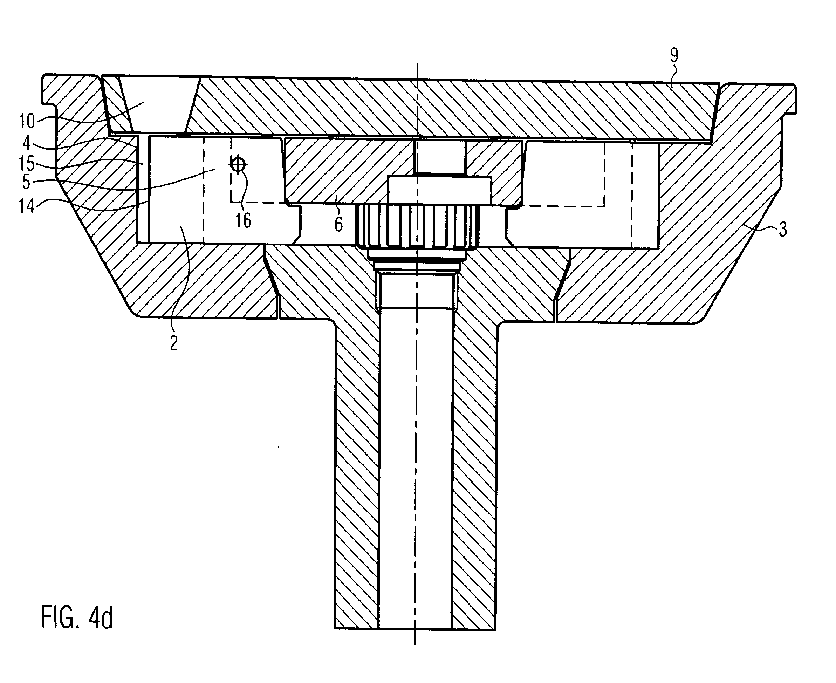

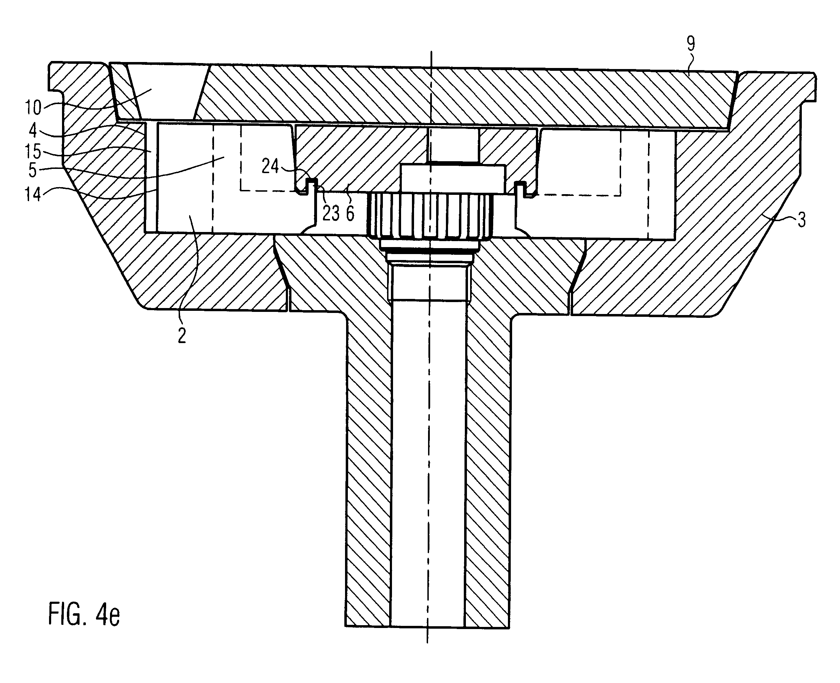

Fig. 4d zeigt einen Teilquerschnitt, der einen Flügel 2 mit Anschlag 16 zeigt. Der Anschlag 16, z.B. ein Stift, schlägt bei einer Bewegung des Flügels 2 nach außen an dem außerhalb des Spannexzenters 6 angeordneten Rotor 5 an und begrenzt somit die Bewegung nach außen, derart, dass der Spalt 15 im Einstellbereich aufrechterhalten werden kann. Fig. 4e zeigt eine weitere Möglichkeit, die Bewegung der Flügel 2 nach außen zu begrenzen. Hier werden die Flügel 2 in dem Spannexzenter 6 derart geführt, dass eine Bewegung des Flügels 2 in Richtung Pumpengehäuse begrenzt ist. Dabei kann beispielsweise eine Nase 23 des Flügels in einer entsprechenden Nut 24 im Spannexzenter laufen, oder umgekehrt, eine Nase des Spannexzenters in der Nut des Flügels.

Fig. 4c zeigt ein Führungselement 13, das so ausgebildet sein kann, wie im Zusammenhang mit der Fig. 4c beschrieben ist, und das ebenfalls ein "Hinauslaufen" des Flügels vor dem Kompressionsbereich verhindert.

Durch Einsetzen von Führungselementen 13 mit unterschiedlichen Abmessungen und / oder Austausch des Spannexzenters kann die Spaltbreite s und/ oder Länge l (d.h. der Punkt 18 an dem die Flügelzellenkammern durch die Flügel verschlossen werden) des Spalts 15 und somit die Kompression eingestellt werden.

Nachfolgend wird das erfindungsgemäße Verfahren unter Bezugnahme der Figuren näher erläutert.

Zunächst werden für verschiedene Medien Führungsbahnen der Flügel festgelegt, durch die ein bestimmter Druck in den Flügelzellenkammern 8 im Kompressionsbereich erzeugt werden kann.

Für eine bestimmte pastöse Masse, die über die Füllmaschine, wie sie in Fig. 7 gezeigt ist, abgefüllt werden soll, wird dann beispielsweise ein bestimmter Spannexzenter 6 mit einer entsprechenden Führungskontur 7a,b in die Flügelzellenpumpe eingesetzt. Zusätzlich oder alternativ kann ein entsprechendes Führungselement 13 (siehe Fig. 4c) eingesetzt werden.

Bei sehr hoher Kompression wird beispielsweise ein Spannexzenter, wie er in Fig. 2 gezeigt ist, eingesetzt, wobei es hier vorzugsweise keinen Spalt 15 in einem Bereich zwischen dem Ende 10a des Einlassbereichs 10 und dem Kompressionsbereich, hier die Stelle, an der sich die Flügelzellenkammern verkleinern und die Kammern 8 geschlossen werden, ergibt.

Wenn eine pastöse Masse abgefüllt werden soll, bei der die Kompression reduziert werden soll, wird ein Spannexzenter 6 eingesetzt, der eine Führungskontur 7b aufweist derart, dass ein Spalt 15 im Einstellbereich, also zumindest zwischen Punkt 10a und dem Punkt 18, an dem die Kammern 8 verschlossen werden, erzeugt wird. Alternativ oder zusätzlich wird ein entsprechendes Führungselement 13 verwendet.

Die abzufüllende pastöse Masse wird dabei über den Einlass 10 der Flügelzellenpumpe zugeführt und in Drehrichtung in Richtung Auslass 11 gefördert. Die Flügelzellen haben hier im Bereich des Einlasses 10 einen Abstand zur Innenwand 4, beispielsweise in einem Bereich von 0,5 bis 10 mm, wobei über den Abstand die gewünschte Kompression einstellbar ist. Die Flügel 2 laufen dann abhängig davon, wie weit sie von dem Spannexzenter 6 herausgefahren werden, auf die enger werdende Pumpenaußenkontur und schließen dann die Kammer vollständig ab. Bis zum vollständigen Schließen der Flügelzellenkammern 8 kann durch den Spalt 15 zwischen Flügel 2 und Innenwand 4 des Pumpengehäuses noch Füllgut in die nachfolgenden Kammern zurückströmen, wodurch der erreichbare Druck in der Flügelzellenkammer reduziert wird. Die Kompression wird auch beeinflusst durch die Länge des Spalts, d.h. an welchem Punkt 18 die Flügelzellenkammern vollständig verschlossen werden. Je länger bzw. breiter der Spalt 15 ist, desto kleiner die Kompression.

Hier liegt der Spalt vorzugsweise mindestens in einem Bereich zwischen Einlassbereichende 10a und der bereits enger werdenden Innenkontur des Pumpengehäuses 3.

Möchte man in einem weiteren Prozess ein anderes Medium abfüllen, so kann dann die Führungseinrichtung 6, 13 entsprechend ausgetauscht oder angepasst werden, um die Führung der Flügel anzupassen. Somit kann der Druck in den Flügelzellenkammern 8 exakt eingestellt werden und an den Druck im Auslassbereich 11 angepasst werden derart, dass es zu keinem Pulsieren kommt und somit eine höhere Gewichtsgenauigkeit der abgefüllten Portionen erreicht werden kann. Die Änderungen können einfach vom Kunden selbst durchgeführt werden.

**Patentansprüche**

1. Verfahren zum Einstellen der Kompression in den Flügelzellenkammern (8) im Kompressionsbereich einer Flügelzellenpumpe (1) zum Fördern pastöser Massen, insbesondere Wurstbrät, wobei die Kompression durch Änderung der Führung der Flügel eingestellt wird, und **dadurch gekennzeichnet, dass** die Flügel (2) zur Reduktion der Kompression so geführt werden, dass in einem Einstellbereich ein Spalt (15) zwischen den Flügelenden (14) und einer Innenwand (4) des Pumpengehäuses (3) entsteht und wobei die Kompression durch Ändern der Spaltbreite (s) und/oder Spaltlänge eingestellt wird..

2. Verfahren nach Anspruch 1, **dadurch gekennzeichnet, dass** in dem Einstellbereich, in Drehrichtung betrachtet vor dem Kompressionsbereich (K) die Führung der Flügel (2) in Abhängigkeit der gewünschten Kompression eingestellt wird, derart, dass sich eine Änderung der Flügelstellung in Radialrichtung ergibt, wobei der Einstellbereich sich zumindest vom Ende (10a) eines Einlassbereichs (10) bis zu einem Anfangspunkt (18) des Kompressionsbereichs, an dem ein Flügel (2) eine Flügelzellenkammer (8) schließt, erstreckt.

3. Verfahren nach mindestens einem der Ansprüche 1 bis 2, **dadurch gekennzeichnet, dass** die Änderung der Führung der Flügel (2) durch Austauschen einer Führungseinrichtung (6, 13), insbesondere eines Spannexzenters (6), mit einer Führungseinrichtung mit unterschiedlicher Führungskontur erfolgt.

4. Verfahren nach mindestens einem der Ansprüche 1 bis 3, **dadurch gekennzeichnet, dass** die Änderung der Führung durch Einstellen der Führungskontur einer Führungseinrichtung (6, 13), insbesondere eines Spannexzenters (6) erfolgt.

5. Verfahren nach mindestens einem der Ansprüche 1 bis 4, **dadurch gekennzeichnet, dass** die Führung der Flügel (2) geändert wird, indem im Einstellbereich ein Führungselement (13) an der Innenwand (4) des Pumpengehäuses (3) vorgesehen wird.

6. Verfahren nach mindestens einem der Ansprüche 1 bis 5, **dadurch gekennzeichnet, dass** die Bewegung der Flügel (2) nach außen in Richtung Pumpengehäuse (3) beschränkt wird.

7. Flügelzellenpumpe, insbesondere zum Durchführen des Verfahrens nach mindestens einem der Ansprüche 1 bis 6, mit einem Pumpengehäuse (3), Flügeln (2), einem Rotor (5) und mit einer Führungseinrichtung (6, 13) zum Führen der Flügel (2) in Radialrichtung, **dadurch gekennzeichnet, dass** die Führungseinrichtung (6, 13) derart ausgebildet ist, dass vor einem Kompressionsbereich (K) ein Spalt (15) zwischen den Flügelenden (14) und der Innenwand (4) des Pumpengehäuses (3) entsteht, zumindest vom Ende eines Einlassbereichs (10a) bis zu Beginn (18) des Kompressionsbereichs (K), wobei die Spaltbreite (s) und/oder Spaltlänge durch eine Änderung der Führung der Flügel (2) und somit die Kompression in den Flügelzellenkammern (8) veränderbar ist.

8. Flügelzellenpumpe nach Anspruch 7, **dadurch gekennzeichnet, dass** der Spalt (15) eine Breite (s) in einem Bereich von 0,5 bis 10 mm aufweist.

9. Flügelzellenpumpe nach mindestens einem der Ansprüche 7 bis 10, **dadurch gekennzeichnet, dass** die Flügelzellenpumpe (1) eine oder mehrere austauschbare Führungseinrichtungen (6, 13) aufweist, insbesondere mehrere Spannexzenter (6) mit unterschiedlichen Führungskonturen (7a, 7b).

10. Flügelzellenpumpe nach Anspruch 9, **dadurch gekennzeichnet, dass** der Spannexzenter (6) eine Einrichtung zum Verstellen der Führungskontur aufweist und insbesondere zwei- oder mehrteilig ausgebildet ist.

11. Flügelzellenpumpe nach mindestens einem der Ansprüche 8 bis 10, **dadurch gekennzeichnet, dass** die Flügelzellenpumpe (1) ein Führungselement (13) im Einstellbereich aufweist, das an der Innenwand (4) des Pumpengehäuses angeordnet ist und sich insbesondere über einen Teil der Höhe der Flügel (2) erstreckt.

12. Flügelzellenpumpe nach mindestens einem der Ansprüche 8 bis 11, **dadurch gekennzeichnet, dass** die Flügelzellenpumpe (1) eine Einrichtung zum Beschränken der Flügelbewegung nach außen in Richtung Pumpengehäuse umfasst, insbesondere ein Führungselement (13), das an der Innenkontur des Pumpengehäuses angeordnet ist und/oder einen Anschlag (15) der Flügel am Rotor (5) und/oder eine Führung des Flügels in dem Spannexzenter (6), die eine Bewegung des Flügels (2) in Richtung Pumpengehäuse (3) begrenzt.

13. Verfahren nach mindestens einem der Ansprüche 1 bis 6, **dadurch gekennzeichnet, dass** die Führung der umlaufenden Flügel (2) in Radialrichtung in Abhängigkeit der abzufüllenden pastösen Masse eingestellt wird.

**14.** Flügelzellenpumpe nach Anspruch 7, **dadurch gekennzeichnet, dass** die Führungseinrichtung, insbesondere ein Spannexzenter (6), derart gelagert ist, dass seine Position in Radialrichtung verstellbar ist und insbesondere der Spannexzenter in einem sich nach außen in Richtung Pumpengehäuse erstreckendem Langloch verstellbar gelagert ist.

**Claims**

**1.** Method for adjusting the compression in the vane cell chambers (8) in the compression region of a vane cell pump (1) for conveying pasty substance, in particular sausage meat, wherein the compression is adjusted by changing the guide of the vanes, and **characterized in that** for reducing the compression, said vanes (2) are guided such that, in an adjustment region, a gap (15) is formed between the vane tips (14) and an inner wall (4) of the pump housing (3) and where the compression is adjusted by changing the gap width (s) and / or the gap length.

**2.** A method according to claim 1, **characterized in that**, in an adjustment region prior to said compression region (K), when viewed in the direction of rotation, said guide of said vanes (2) is adjusted in dependency of the desired compression such that a change of the vane position in the radial direction results, and that said adjustment region extends at least from the end (10a) of an inlet region (10) to a beginning point of said compression region at which a vane (2) closes a vane cell chamber (8).

**3.** Method according to at least one of the claims 1 to 2, **characterized in that** changing said guide of said vanes (2) is performed by replacing a guide device (6, 13), in particular a clamping eccentric (6) with a guide device having a different guide contour.

**4.** Method according to at least one of the claims 1 to 3, **characterized in that** changing said guide is performed by adjusting the guide contour of a guide device (6, 13), in particular of a clamping eccentric (6).

**5.** Method according to at least one of the claims 1 to 3, **characterized in that** said guide of said vanes (2) is changed **in that** a guide element (13) is provided in said adjustment region at said inner wall (4) of said pump housing (3).

**6.** Method according to at least one of the claims 1 to 5, **characterized in that** movement of said vanes (2) outwardly in the direction of said pump housing (3) is restricted.

**7.** Vane cell pump, in particular for performing the method according to at least one of the claims 1 to 6, comprising a pump housing (3), vanes (2), a rotor (5) and having a guide device (6, 13) for guiding said vanes (2) in the radial direction, **characterized in that** said guide device (6, 13) is formed such that a gap (15) is formed prior to a compression region (K) between said vane tips (14) and said inner wall (4) of said pump housing (3), at least from the end of an inlet region (10a) to the beginning (18) of said compression region (K), wherein said gap width (s) and / or said gap length is adjustable by changing said guide of said vanes (2) and thus the compression in said vane cell chambers (8).

**8.** Vane cell pump according to claim 7, **characterized in that** said gap (15) preferably has a width (s) in a range from 0.5 to 10 mm.

**9.** Vane cell pump according to at least one of the claims 7 to 10, **characterized in that** said vane cell pump (1) comprises one or more exchangeable guide devices (6, 13), in particular several clamping eccentrics (6) having different guide contours (7a, 7b).

**10.** Vane cell pump according to claim 9, **characterized in that** said clamping eccentric (6) comprises a device for adjusting said guide contour and is formed in particular by two or more parts.

**11.** Vane cell pump according to at least one of the claims 8 to 10, **characterized in that** said vane cell pump (1) in said adjustment region comprises a guide element (13) which is arranged at said inner wall (4) of said pump housing and extends in particular over part of the height of said vanes (2).

**12.** Vane cell pump according to at least one of the claims 8 to 11, **characterized in that** said vane cell pump (1) comprises a device for restricting the vane movement outwardly toward said pump housing, in particular a guide element (13) disposed at the inner contour of said pump housing and / or a stop (15) for said vanes at said rotor (5) and / or a guide for said vane in said clamping eccentric (6), which restricts movement of said vane (2) in the direction of said pump housing (3).

**13.** Method according to at least one of the claims 1 to 6, **characterized in that** said guide for said rotating vanes (2) is adjusted in the radial direction in dependency of the pasty substance to be filled.

**14.** Vane cell pump according to at least claim 7, **characterized in that** said guide device, in particular said clamping eccentric (6), is supported such that its position is adjustable in the radial direction and, in particular, said clamping eccentric is adjustably supported in a long hole extending outwardly in the direction of said pump housing.

**Revendications**

1. Procédé de réglage de la compression dans les chambres à palettes (8) de la zone de compression d'une pompe à palettes (1) pour l'alimentation de masses pâteuses, en particulier de la chair à saucisse,
dans lequel la compression est réglée par modification du guidage des palettes, et
**caractérisé**
**en ce que** les palettes (2) sont guidées pour la réduction de la compression de telle sorte qu'un intervalle (15) se forme dans une plage de réglage entre les extrémités de palette (14) et une paroi interne (4) du corps de pompe (3), et dans lequel la compression est réglée en modifiant la ou les largeurs d'intervalle (s) et/ou la ou les longueurs d'intervalle.

2. Procédé selon la revendication 1, **caractérisé en ce que** le guidage des palettes (2) est réglé dans la plage de réglage avant la zone de compression (K), selon le sens de rotation, en fonction de la compression souhaitée, de telle sorte qu'une modification de la position des palettes se produit en direction radiale, dans lequel la plage de réglage s'étend au moins depuis l'extrémité (10a) d'une zone d'admission (10) jusqu'à un point de commencement (18) de la zone de compression où une palette (2) ferme une chambre à palettes (8).

3. Procédé selon au moins l'une des revendications 1 et 2, **caractérisé en ce que** le changement du guidage des palettes (2) s'effectue par commutation d'un dispositif de guidage (6, 13), en particulier un excentrique de serrage (6), avec un dispositif de guidage à contour de guidage variable.

4. Procédé selon au moins l'une des revendications 1 à 3, **caractérisé en ce que** le changement du guidage s'effectue par réglage du contour de guidage d'un dispositif de guidage (6, 13), en particulier un excentrique de serrage (6).

5. Procédé selon au moins l'une des revendications 1 à 4, **caractérisé en ce que** le guidage des palettes (2) est modifié de telle sorte qu'un élément de guidage (13) est pourvu sur la paroi interne (4) du corps de pompe (3) dans la plage de réglage.

6. Procédé selon au moins l'une des revendications 1 à 5, **caractérisé en ce que** le déplacement des palettes (2) est limité vers l'extérieur en direction du corps de pompe (3).

7. Pompe à palettes, en particulier pour la mise en oeuvre du procédé selon au moins l'une des revendications 1 à 6, avec un corps de pompe (3), des palettes (2), un rotor (5) et un dispositif de guidage (6, 13) pour guider les palettes (2) en direction radiale, **caractérisée en ce que** le dispositif de guidage (6, 13) est constitué de telle sorte qu'un intervalle (15) entre les extrémités de palette (14) et la paroi interne (4) du corps de pompe (3) est constitué avant une zone de compression (K), au moins depuis l'extrémité d'une zone d'admission (10a) jusqu'au début (18) de la zone de compression (K), dans lequel une modification du guidage des palettes (2) permet de modifier la largeur d'intervalle (s) et/ou la longueur d'intervalle, et par conséquent la compression dans les chambres à palettes (8).

8. Pompe à palettes selon la revendication 7, **caractérisée en ce que** l'intervalle (15) présente une largeur (s) comprise dans une plage de 0,5 mm à 10 mm.

9. Pompe à palettes selon au moins l'une des revendications 7 à 10, **caractérisée en ce que** la pompe à palettes (1) comporte un ou plusieurs dispositifs de guidage commutables (6, 13), en particulier plusieurs excentriques de serrage (6) avec différents contours de guidage (7a, 7b).

10. Pompe à palettes selon la revendication 9, **caractérisée en ce que** l'excentrique de serrage (6) comporte un dispositif d'ajustement du contour de guidage, et est en particulier constitué de deux pièces ou plus.

11. Pompe à palettes selon au moins l'une des revendications 8 à 10, **caractérisée en ce que** la pompe à palettes (1) comporte un élément de guidage (13) dans la plage de réglage qui est agencé sur la paroi interne (4) du corps de pompe et s'étend en particulier sur une partie de la hauteur des palettes (2).

12. Pompe à palettes selon au moins l'une des revendications 8 à 11, **caractérisée en ce que** la pompe à palettes (1) comporte un dispositif pour limiter le déplacement des palettes vers l'extérieur en direction du corps de pompe, en particulier un élément de guidage (13) qui est agencé sur le contour interne du corps de pompe et/ou une butée (15) pour les palettes sur le rotor (5) et/ou un guidage de palette dans l'excentrique de serrage (6) qui limite le déplacement de la palette (2) en direction du corps de pompe (3).

13. Procédé selon au moins l'une des revendications 1 à 6, **caractérisé en ce que** le guidage des palettes rotatives (2) est réglé en direction radiale en fonction de la masse pâteuse à alimenter.

14. Pompe à palettes selon la revendication 7, **caracté-**

**risée en ce que** le dispositif de guidage, en particulier un excentrique de serrage (6), est monté de telle sorte que sa position est réglable en direction radiale, et en particulier **en ce que** l'excentrique de serrage est monté de manière mobile dans un trou oblong qui s'étend vers l'extérieur en direction du corps de pompe.

FIG. 1

FIG. 2

FIG. 3

FIG. 4a

EP 2 532 244 B1

FIG. 4b

EP 2 532 244 B1

FIG. 4c

FIG. 4d

FIG. 4e

FIG. 5

FIG. 6

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0084291 A
- EP 0432388 B2